(19) Europäisches Patentamt
European Patent Office
Office européen des brevets

(11) **EP 3 180 828 B1**

(12) **EUROPÄISCHE PATENTSCHRIFT**

(45) Veröffentlichungstag und Bekanntmachung des Hinweises auf die Patenterteilung:
**01.09.2021 Patentblatt 2021/35**

(21) Anmeldenummer: **14786156.1**

(22) Anmeldetag: **10.10.2014**

(51) Int Cl.:
***H02H 7/045*** *(2006.01)*

(86) Internationale Anmeldenummer:
**PCT/EP2014/071779**

(87) Internationale Veröffentlichungsnummer:
**WO 2016/055123 (14.04.2016 Gazette 2016/15)**

(54) **DIFFERENTIALSCHUTZVERFAHREN UND DIFFERENTIALSCHUTZEINRICHTUNG FÜR EINEN TRANSFORMATOR**

DIFFERENTIAL PROTECTION METHOD AND DIFFERENTIAL PROTECTION DEVICE FOR A TRANSFORMER

PROCÉDÉ DE PROTECTION DIFFÉRENTIELLE ET DISPOSITIF DE PROTECTION DIFFÉRENTIELLE POUR TRANSFORMATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.06.2017 Patentblatt 2017/25**

(73) Patentinhaber: **Siemens Aktiengesellschaft 80333 München (DE)**

(72) Erfinder: **WEILBIER, Jörg 12355 Berlin (DE)**

(56) Entgegenhaltungen:
**WO-A1-2007/057240    CN-A- 103 746 338 US-B1- 6 507 184**

• **None**

**Beschreibung**

Die Erfindung betrifft ein Differentialschutzverfahren zum Überwachen eines dreiphasigen Transformators hinsichtlich interner Fehler, bei dem auf allen Seiten des Transformators für jede Phase den Stromverlauf innerhalb der jeweiligen Phase angebende Strommesswerte erfasst werden, unter Verwendung der erfassten Strommesswerte einer Bezugsseite des Transformators einerseits und amplituden- und phasenwinkelangepassten Strommesswerten aller übrigen Seiten des Transformators andererseits unter Bildung jeweiliger Differenzwerte eine phasenbezogene Differenzwertbildung durchgeführt wird und ein interner Fehler hinsichtlich des Transformators erkannt wird, wenn zumindest einer der Differenzwerte einen vorgegebenen Schwellenwert überschreitet, wobei zur Bildung der amplituden- und phasenwinkelangepassten Strommesswerte zunächst die auf allen übrigen Seiten des Transformators erfassten Strommesswerte für alle Phasen unter Verwendung des Transformatorübersetzungsverhältnisses unter Bildung von amplitudenangepassten Strommesswerten einer Amplitudenanpassung unterzogen und daraufhin die amplitudenangepassten Strommesswerte unter Bildung von amplituden- und phasenwinkelangepassten Strommesswerten einer Phasenwinkelanpassung unterzogen werden, die eine durch den Transformator bewirkte Phasenverschiebung ausgleicht.

Zum Schutz von dreiphasigen Transformatoren in elektrischen Energieversorgungssystemen ist es bekannt, ein sogenanntes Differentialschutzverfahren einzusetzen. Dabei werden mittels einer Differentialschutzeinrichtung phasenweise Strommesswerte, die auf allen Seiten des Transformators erfasst worden sind, miteinander verglichen und es wird ein interner Fehler erkannt, wenn die Differenz der Strommesswerte von allen Seiten des Transformators für mindestens eine Phase einen vorgegebenen Schwellenwert überschreitet.

Da ein Transformator selbst eine Veränderung der Amplitude und des Phasenwinkels bewirkt, müssen die Strommesswerte mindestens einer Seite vor der Differenzwertbildung hinsichtlich ihrer Amplitude und ihres Phasenwinkels angepasst werden, um miteinander vergleichbare Strommesswerte für beide Seiten des Transformators zu erhalten. Diese Anpassung erfolgt hinsichtlich der Amplitude aus dem bekannten Übersetzungsverhältnis des Transformators. Die Amplitudenanpassung ist dem Fachmann hinlänglich bekannt und wird daher an dieser Stelle nicht eingehender erläutert. Hinsichtlich des Phasenwinkels findet ebenfalls eine Anpassung durch Verwendung entsprechender Anpassungsmatrizen statt. Die jeweilige Anpassungsmatrix leitet sich bei herkömmlichen Transformatoren aus der Schaltgruppe des Transformators ab und kann beispielsweise aus entsprechenden Tabellenwerken abgeleitet werden. Entsprechende Einstellungstabellen liegen üblicherweise für Phasenwinkelverschiebungen in 30°-Schritten vor.

Ein Differentialschutzverfahren für einen Transformator mit solchen gestuft vorgegebenen Anpassungsmatrizen ist beispielsweise aus der deutschen Offenlegungsschrift DE 102 61 837 A1 bekannt.

Die Anwendung sogenannter Phasenschiebertransformatoren mit im Betrieb verstellbarer, beliebiger Phasenverschiebung nimmt insbesondere durch die Einspeisung nur diskontinuierlich verfügbarer regenerativer Energiequellen zu. Solche Transformatoren können mit den bekannten, in Stufen einstellbaren Anpassungsmatrizen nur durch eine entsprechend unempfindliche Einstellung des Schwellenwertes für den Differentialschutz gegen Fehler geschützt werden. Daher besteht der Bedarf für Differentialschutzverfahren und Differentialschutzeinrichtungen, bei denen die Anpassung der Strommesswerte stufenlos an die tatsächlich vorliegende Phasenwinkelverschiebung erfolgen kann. Ein beispielhaftes Differentialschutzverfahren mit stufenloser Phasenwinkelanpassung ist beispielsweise aus der US 6, 507, 184 B1 bekannt. Bei dem bekannten Verfahren erfolgt die Anpassung durch Verwendung einer Anpassungsmatrix mit zueinander orthogonalen Matrizenkomponenten. Ein anderes solches Verfahren ist aus der WO 2007/057240 A1 bekannt.

Der Erfindung liegt die Aufgabe zugrunde, eine alternative Methode zu Phasenwinkelanpassung der Strommesswerte bei einem Differentialschutzverfahren und einer Differentialschutzeinrichtung anzugeben, die eine freie Einstellung der Phasenwinkelverschiebung erlaubt und vergleichsweise einfach durchgeführt werden kann.

Zur Lösung dieser Aufgabe wird ein Differentialschutzverfahren der eingangs genannten Art dahingehend ausgebildet, dass zur Phasenwinkelanpassung der Strommesswerte der jeweiligen übrigen Seite des Transformators die folgende Gleichung verwendet wird:

$$\begin{pmatrix} I_a'' \\ I_b'' \\ I_c'' \end{pmatrix} = \begin{pmatrix} k(\alpha) & k(\alpha - 120°) & k(\alpha + 120°) \\ k(\alpha + 120°) & k(\alpha) & k(\alpha - 120°) \\ k(\alpha - 120°) & k(\alpha + 120°) & k(\alpha) \end{pmatrix} \cdot \begin{pmatrix} I_a' \\ I_b' \\ I_c' \end{pmatrix},$$

mit dem Matrixkoeffizienten

$$k(\alpha) = \frac{2}{3} \cdot \cos(\alpha) + \frac{1}{3} \cdot \sqrt{2} \cdot \cos\left(3 \cdot \alpha + \frac{1}{4} \cdot \pi\right),$$

wobei

$I''_a$ = amplituden- und phasenwinkelangepasster Strommesswert der jeweiligen übrigen Seite des Transformators für Phase a;

$I''_b$ = amplituden- und phasenwinkelangepasster Strommesswert der jeweiligen übrigen Seite des Transformators für Phase b;

$I''_c$ = amplituden- und phasenwinkelangepasster Strommesswert der jeweiligen übrigen Seite des Transformators für Phase c;

$I'_a$ = amplitudenangepasster Strommesswert der jeweiligen übrigen Seite des Transformators für Phase a;

$I'_b$ = amplitudenangepasster Strommesswert der jeweiligen übrigen Seite des Transformators für Phase b;

$I'_c$ = amplitudenangepasster Strommesswert der jeweiligen übrigen Seite des Transformators für Phase c;

$\alpha$ = durch den Transformator im belasteten Zustand be-wirkte Phasenwinkelverschiebung zwischen den phasenbezogenen Strömen auf der jeweiligen übrigen Seite des Transformators hinsichtlich der phasenbezogenen Ströme auf der Bezugsseite des Transformators, wobei

die durch den Transformator im belasteten Zustand bewirkte Phasenwinkelverschiebung zwischen den phasenbezogenen Strömen auf der jeweiligen übrigen Seite des Transformators hinsichtlich der phasenbezogenen Ströme auf der Bezugsseite des Transformators aus der Stellung eines Stufenschalters des Transformators abgeleitet wird, wobei die Phasenwinkelverschiebung unter Verwendung einer die jeweilige Phasenwinkelverschiebung in Abhängigkeit von der jeweiligen Stellung des Stufenschalters beschreibenden mathematischen Gleichung ermittelt wird, die die magnetische und elektrische Verkopplung der Induktivitäten des Transformators berücksichtigt, wobei sich Koeffizienten dieser Gleichung aus Windungszahl-Verhältnissen ableiten.

Die vorgeschlagene Anpassungsmatrix mit dem Matrixkoeffizienten k kann vorteilhaft zur Phasenwinkelanpassung der Strommesswerte an beliebige Phasenwinkel $\alpha$ eingesetzt werden. Diese Phasenwinkelverschiebung $\alpha$ gilt im belasteten Zustand für die Strommesswerte und entspricht im lastfreien Zustand (in dem quasi keine Ströme durch den Transformator fließen) der hinsichtlich der Spannungen ("No load Voltage") bewirkten Phasenwinkelverschiebung.

Der Differentialschutzvergleich findet anschließend mit den amplituden- und phasenwinkelangepassten Strommesswerten der jeweiligen übrigen Seite des Transformators und mit den erfassten Strommesswerten der Bezugsseite des Transformators statt. Dabei kann entweder ein fest vorgegebener Schwellenwert oder ein dynamischer Schwellenwert verwendet werden. Für einen dynamischen Schwellenwertvergleich können beispielsweise neben den Differenzstromwerten auch sogenannte Stabilisierungsstromwerte, die beispielsweise die Summe der - ggf. amplituden- und phasenwinkelangepassten - Strommesswerte angeben, ermittelt werden, und die Lage eines Wertepaares aus einem Differenzstromwert und einem zugehörigen Stabilisierungswert in einem Auslösediagramm ausgewertet werden. Der Schwellenwert kann dann als eine oder mehrere vom Stabilisierungsstrom abhängige Kurve(n) im Auslösediagramm vorgegeben sein.

Als Bezugsseite des Transformators kann beispielsweise dessen Primärseite verwendet werden. Die jeweiligen übrigen Seiten des Transformators werden in diesem Fall durch eine oder mehrere Sekundärseiten gebildet werden. Im Falle eines Transformators mit zwei Seiten kann die Primärseite beispielsweise die Oberspannungsseite und Sekundärseite (die übrige Seite) die Unterspannungsseite des Transformators sein. Allerdings sind im Rahmen der Erfindung auch andere seitenbezogene Festlegungen möglich, sofern sichergestellt ist, dass durch die Anpassung der Strommesswerte die durch den Transformator selbst bewirkten Veränderungen hinsichtlich Amplitude und Phasenwinkel ausgeglichen werden.

Bei dem erfindungsgemäßen Differentialschutzverfahren ist zudem vorgesehen, dass die durch den Transformator im belasteten Zustand bewirkte Phasenwinkelverschiebung zwischen den phasenbezogenen Strömen auf der jeweiligen übrigen Seite des Transformators hinsichtlich der phasenbezogenen Ströme auf der Bezugsseite des Transformators aus der Stellung eines Stufenschalters des Transformators abgeleitet wird.

Außerdem ist vorgesehen, dass die Phasenwinkelverschiebung unter Verwendung einer die jeweilige Phasenwinkelverschiebung in Abhängigkeit von der jeweiligen Stellung des Stufenschalters beschreibenden mathematischen Gleichung ermittelt wird. Die Gestalt einer solchen Gleichung hängt beispielsweise von der magnetischen und elektrischen Verkopplung der Induktivitäten des Transformators ab. Koeffizienten dieser Gleichung leiten sich aus Windungszahl-Verhältnissen ab. Als Variable bzw. Parameter geht die Stufenschalterstellung ein.

Sofern auf einer Seite des Transformators durch eine entsprechende Sternpunktbehandlung ein Nullstrom entstehen und die Differentialschutzmessung beeinflussen kann, kann gemäß einer vorteilhaften Ausführungsform des erfindungsgemäßen Differentialschutzverfahrens vorgesehen sein, dass bei der Phasenwinkelanpassung zusätzlich eine Korrektur einer Nullstromkomponente der amplitudenangepassten Strommesswerte der jeweiligen übrigen Seite des Transformators stattfindet, wobei in diesem Fall die Phasenwinkelanpassung gemäß der folgenden erweiterten Gleichung durchgeführt wird:

$$\begin{pmatrix} I_a'' \\ I_b'' \\ I_c'' \end{pmatrix} = \begin{pmatrix} k(\alpha) & k(\alpha-120°) & k(\alpha+120°) \\ k(\alpha+120°) & k(\alpha) & k(\alpha-120°) \\ k(\alpha-120°) & k(\alpha+120°) & k(\alpha) \end{pmatrix} \cdot \begin{pmatrix} I_a' \\ I_b' \\ I_c' \end{pmatrix} + f(\alpha) \cdot \begin{pmatrix} I_e' \\ I_e' \\ I_e' \end{pmatrix},$$

mit dem Nullstromkomponenten-Faktor

$$f(\alpha) = \frac{1}{3} \cdot \sqrt{2} \cdot \cos\left(3 \cdot \alpha + \frac{1}{4} \cdot \pi\right),$$

wobei

$I_e' =$ amplitudenangepasster Sternpunktstrom.

Im Vergleich zur Phasenwinkelanpassung ohne Nullstromkorrektur wird hierbei lediglich der von dem Sternpunktstrom abhängige Term

$$f(\alpha) \cdot \begin{pmatrix} I_e' \\ I_e' \\ I_e' \end{pmatrix}$$

mit dem Nullstromkomponenten-Faktor $f(\alpha)$ an die Anpassungsmatrix angefügt.

Gemäß einer vorteilhaften Ausführungsform des erfindungsgemäßen Differentialschutzverfahrens ist in diesem Zusammenhang vorgesehen, dass der Sternpunktstrom durch Messung ermittelt und unter Verwendung des Transformatorübersetzungsverhältnisses unter Bildung eines amplitudenangepassten Sternpunktstromes einer Amplitudenanpassung unterzogen wird.

Diese Ausführungsform eignet sich dann, wenn der Sternpunktstrom durch einen eigenen Stromwandler erfasst werden kann. Sofern der Sternpunktstrom nicht auf derjenigen Seite des Transformators auftritt, für die die Amplituden- und Phasenwinkelanpassung der Strommesswerte erfolgt, ist der Sternpunktstrom zuvor unter Verwendung des Transformatorübersetzungsverhältnisses hinsichtlich seiner Amplitude anzupassen. Eine Möglichkeit zur Messung des Sternpunktstroms ist beispielsweise aus der DE4416048C1 bekannt.

Alternativ zu dieser Ausführungsform kann gemäß einer anderen vorteilhaften Ausführungsform des erfindungsgemäßen Differentialschutzverfahrens auch vorgesehen sein, dass der Sternpunktstrom aus den amplitudenangepassten Strommesswerten der einen Seite des Transformators berechnet wird.

Diese Berechnung kann anhand der amplitudenangepassten Strommesswerte wie folgt stattfinden und ist dem Fachmann als "Nullstromeliminierung" bekannt:

$$I_e' = -(I_a' + I_b' + I_c').$$

Bei dem erfindungsgemäßen Verfahren wird die Stellung des Transformator-Stufenschalters erfasst und daraus eine entsprechende Phasenwinkelverschiebung abgeleitet. Hierfür können beispielsweise entsprechende Tabellen oder Listen, die in einer das Differentialschutzverfahren durchführende Differentialschutzeinrichtung als Datensatz abgespeichert sind, verwendet werden. So könnte prinzipiell vorgesehen sein, dass die Phasenwinkelverschiebung unter Verwendung einer die jeweilige Stellung des Stufenschalters mit der daraus bewirkten Phasenwinkelverschiebung angebenden Tabelle ermittelt wird. Eine solche Tabelle wird üblicherweise in einem Datenspeicher einer das Differentialschutzverfahren ausführenden Differentialschutzeinrichtung im Zuge einer Gerätekonfiguration abgespeichert.

Hinsichtlich der Differentialschutzeinrichtung wird die oben genannte Aufgabe durch eine Differentialschutzeinrichtung zum Überwachen eines dreiphasigen Transformators hinsichtlich interner Fehler gemäß Anspruch 5 gelöst. Die Differentialschutzeinrichtung aufweisend eine Messwerterfassungsvorrichtung, die dazu ausgebildet ist, auf allen Seiten des Transformators für jede Phase den Stromverlauf innerhalb der jeweiligen Phase angebende Strommesswerte zu erfassen, und mit einer Auswerteeinrichtung, die dazu eingerichtet ist, unter Verwendung der erfassten Strommesswerte einer Bezugsseite des Transformators einerseits und amplituden- und phasenwinkelangepassten Strommesswerten aller übrigen Seiten des Transformators andererseits unter Bildung jeweiliger Differenzwerte eine phasenbezogene Differenzwertbildung durchzuführen und einen internen Fehler hinsichtlich des Transformators zu erkennen, wenn zumindest einer der Differenzwerte einen vorgegebenen Schwellenwert überschreitet. Die Auswerteeinrichtung ist dabei dazu eingerichtet, zur Bildung der amplituden- und phasenwinkelangepassten Strommesswerte zunächst die auf allen übrigen Seiten des Transformators erfassten Strommesswerte für alle Phasen unter Verwendung des Transformatorübersetzungsverhältnisses unter Bildung von amplitudenangepassten Strommesswerten einer Amplitudenanpassung zu unterziehen und daraufhin die amplitudenangepassten Strommesswerte unter Bildung von amplituden- und phasenwinkelangepassten Strommesswerten einer Phasenwinkelanpassung zu unterziehen, die eine durch den Transformator bewirkte Phasenverschiebung ausgleicht.

Erfindungsgemäß ist vorgesehen, dass die Auswerteeinrichtung dazu eingerichtet ist, zur Phasenwinkelanpassung der Strommesswerte der einen Seite des Transformators die folgende Gleichung zu verwenden:

$$
\begin{pmatrix} I''_a \\ I''_b \\ I''_c \end{pmatrix} = \begin{pmatrix} k(\alpha) & k(\alpha-120^\circ) & k(\alpha+120^\circ) \\ k(\alpha+120^\circ) & k(\alpha) & k(\alpha-120^\circ) \\ k(\alpha-120^\circ) & k(\alpha+120^\circ) & k(\alpha) \end{pmatrix} \cdot \begin{pmatrix} I'_a \\ I'_b \\ I'_c \end{pmatrix},
$$

mit dem Matrixkoeffizienten

$$
k(\alpha) = \frac{2}{3} \cdot \cos(\alpha) + \frac{1}{3} \cdot \sqrt{2} \cdot \cos\left(3 \cdot \alpha + \frac{1}{4} \cdot \pi\right),
$$

wobei

$I''_a$ = amplituden- und phasenwinkelangepasster Strommesswert der jeweiligen übrigen Seite des Transformators für Phase a;

$I''_b$ = amplituden- und phasenwinkelangepasster Strommesswert der jeweiligen übrigen Seite des Transformators für Phase b;

$I''_c$ = amplituden- und phasenwinkelangepasster Strommesswert der jeweiligen übrigen Seite des Transformators für Phase c;

$I'_a$ = amplitudenangepasster Strommesswert der jeweiligen übrigen Seite des Transformators für Phase a;

$I'_b$ = amplitudenangepasster Strommesswert der jeweiligen übrigen Seite des Transformators für Phase b;

$I'_c$ = amplitudenangepasster Strommesswert der jeweiligen übrigen Seite des Transformators für Phase c;

$\alpha$ = durch den Transformator im belasteten Zustand be-wirkte Phasenwinkelverschiebung zwischen den phasenbezogenen Strömen auf der jeweiligen übrigen Seite des Transformators hinsichtlich der phasenbezogenen Ströme auf der Bezugsseite des Transformators.

Erfindungsgemäß ist vorgesehen, dass die Messwerterfassungseinrichtung der Differentialschutzeinrichtung Mittel zur Erfassung der Stellung eines Stufenschalters des Transformators aufweist. Bei den Mitteln zur Erfassung der Stellung des Stufenschalters kann es sich beispielsweise um einen oder mehrere Binäreingänge der Messwerterfassungseinrichtung mit einer nachgeschalteten Auswertelogik handeln.

Außerdem ist erfindungsgemäß vorgesehen, dass die Auswerteeinrichtung dazu eingerichtet ist, die Phasenwinkelverschiebung unter Verwendung einer die jeweilige Phasenwinkelverschiebung in Abhängigkeit von der jeweiligen Stellung des Stufenschalters beschreibenden mathematischen Gleichung zu ermitteln, die die magnetische und elektrische Verkopplung der Induktivitäten des Transformators berücksichtigt, wobei sich Koeffizienten dieser Gleichung aus Windungszahl-Verhältnissen ableiten.

Gemäß einer Ausführungsform der erfindungsgemäßen Differentialschutzeinrichtung ist zur Nullstromkorrektur vorgesehen, dass bei der Phasenwinkelanpassung zusätzlich eine Korrektur einer Nullstromkomponente der amplitudenangepassten Strommesswerte der jeweiligen übrigen Seite des Transformators stattfindet, wobei in diesem Fall die Phasenwinkelanpassung gemäß der folgenden erweiterten Gleichung durchgeführt wird:

$$
\begin{pmatrix} I_a'' \\ I_b'' \\ I_c'' \end{pmatrix} = \begin{pmatrix} k(\alpha) & k(\alpha-120°) & k(\alpha+120°) \\ k(\alpha+120°) & k(\alpha) & k(\alpha-120°) \\ k(\alpha-120°) & k(\alpha+120°) & k(\alpha) \end{pmatrix} \cdot \begin{pmatrix} I_a' \\ I_b' \\ I_c' \end{pmatrix} + f(\alpha) \cdot \begin{pmatrix} I_e' \\ I_e' \\ I_e' \end{pmatrix} \quad ,
$$

mit dem Nullstromkomponenten-Faktor

$$
f(\alpha) = \frac{1}{3} \cdot \sqrt{2} \cdot \cos\left(3 \cdot \alpha + \frac{1}{4} \cdot \pi\right),
$$

wobei

$I_e'$ = amplitudenangepasster Sternpunktstrom.

Gemäß einer weiteren vorteilhaften Ausführungsform der erfindungsgemäßen Einrichtung kann zudem vorgesehen sein, dass die Messwerterfassungseinrichtung oder die Auswerteeinrichtung der Differentialschutzeinrichtung Mittel zur Erfassung der durch den Transformator im belasteten Zustand bewirkten Phasenwinkelverschiebung zwischen den phasenbezogenen Strömen auf der jeweiligen übrigen Seite des Transformators hinsichtlich der phasenbezogenen Ströme auf der Bezugsseite des Transformators aufweist. Bei den Mitteln kann es sich beispielsweise um eine entsprechende Logik zur Berechnung der Phasenwinkelverschiebung aus den gemessenen Strommesswerten handeln. Alternativ kann die Phasenwinkelerkennung jedoch auch mittels einer separaten Einrichtung erfolgen, so dass die Mittel zur Erfassung der Phasenwinkelverschiebung in diesem Fall durch einen entsprechenden Signaleingang der Messwerterfassungseinrichtung gebildet werden, der mit der separaten Einrichtung in Verbindung steht und die ermittelte Phasenwinkelverschiebung als Eingangssignal empfängt. Da die Phasenwinkelverschiebung der Ströme im belasteten Zustand wie oben erläutert der Phasenverschiebung der Spannungen im lastfreien Zustand entspricht, kann die Messung der Phasenwinkelverschiebung auch durch eine entsprechende Spannungsmessung im lastfreien Zustand durchgeführt werden. Die Mittel zur Erfassung der Phasenwinkelverschiebung sind dann entsprechend alternativ oder zusätzlich zur Spannungsmessung ausgebildet.

Hinsichtlich der erfindungsgemäßen Einrichtung gelten zudem alle zu dem erfindungsgemäßen Verfahren voranstehend und nachfolgend gemachten Ausführungen und umgekehrt in entsprechender Weise, insbesondere ist die erfindungsgemäße Einrichtung zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Einrichtung wird auf die zu dem erfindungsgemäßen Verfahren beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Einrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Im Rahmen des Ausführungsbeispiels wird aus Gründen der vereinfachten Darstellung von einem Transformator mit zwei Seiten ausgegangen. Zur Anwendung der Erfindung auf Transformatoren mit mehr als zwei Seiten muss die beschriebene Vorgehensweise jedoch nur für alle übrigen Seiten (außer der Bezugsseite) in entsprechender Weise durchgeführt werden.

Hierzu zeigt die Figur in schematischer Ansicht einen Ausschnitt eines zweiseitigen dreiphasigen elektrischen Energieversorgungssystems mit einem Transformator 10, der mittels einer Differentialschutzeinrichtung 11 hinsichtlich des Auftretens interner Fehler (z.B. Kurzschlüsse, Erdschlüsse, Windungsfehler) überwacht wird. Hierzu werden auf einer Oberspannungsseite 10a ("Bezugsseite") des Transformators 10 mittels Strommesseinrichtungen (z.B. induktiven Wandlern oder sogenannten nicht-konventionellen Wandlern) Strommesswerte $I_A$, $I_B$, $I_C$ erfasst und einem Eingang einer Messwerterfassungseinrichtung 12 der Differentialschutzeinrichtung 11 zugeführt. In entsprechender Weise werden auf der Niederspannungsseite 10b ("übrige Seite") des Transformators 10 mittels Strommesseinrichtungen Strom-

messwerte $I_a$, $I_b$, $I_c$ erfasst und einem weiteren Eingang der Messwerterfassungseinrichtung 12 der Differentialschutzeinrichtung 11 zugeführt. Die Strommesswerte $I_A$, $I_B$, $I_C$, $I_a$, $I_b$, $I_c$ können dabei in analoger oder digitaler Form zur Messwerterfassungseinrichtung 12 übertragen werden. Sofern die Strommesswerte $I_A$, $I_B$, $I_C$, $I_a$, $I_b$, $I_c$ als analoge Messwerte an der Messwerterfassungseinrichtung 12 anliegen, werden sie dort ggf. gefiltert und einer A/D-Wandlung unterzogen. Andernfalls findet eine Filterung und A/D-Wandlung bereits außerhalb der Messwerterfassungseinrichtung 12, beispielsweise mittels einer sogenannten Remote Terminal Unit oder einer Merging Unit statt; die digitalisierten Messwerte werden dann über einen Prozessbus zur Differentialschutzeinrichtung 11 übertragen.

Die Messwerterfassungseinrichtung 12 ist ausgangsseitig mit einer Auswerteeinrichtung 13 der Differentialschutzeinrichtung 11 verbunden, bei der es sich beispielsweise um einen entsprechend ausgebildeten Hardwarerechenbaustein (ASIC, FPGA), eine zentrale Mikroprozessorbaugruppe, einen Digitalen Signalprozessor oder eine Kombination aus den genannten handeln kann. Die Auswerteeinrichtung 13 ist durch software- und/oder hardwarebestimmte Programmierung dazu eingerichtet, unter Nutzung der Strommesswerte von beiden Seiten des Transformators 10 ein Differentialschutzverfahren durchzuführen, um etwaige interne Fehler erkennen und abschalten zu können.

Da bei der Transformation von Strom und Spannung durch den Transformator 10 im Vergleich zu den oberspannungsseitig anliegenden Größen Veränderungen von Amplitude und Phasenwinkel des niederspannungsseitig abgegebenen Stroms (und der niederspannungsseitig abgegebenen Spannung) stattfinden, müssen für die Durchführung des Differentialschutzverfahrens die Strommesswerte $I_a$, $I_b$, $I_c$ der Niederspannungsseite 10b des Transformators 10 hinsichtlich ihrer Amplitude und ihres Phasenwinkels zunächst angepasst werden.

Zur amplitudenbezogenen Anpassung werden die Strommesswerte $I_a$, $I_b$, $I_c$ unter Verwendung des Transformatorübersetzungsverhältnisses n angepasst. Dieses gibt das Verhältnis der Anzahl der jeweiligen Windungen der Oberspannungswicklung und der Unterspannungswicklung an und bestimmt die amplitudenbezogene Veränderung des Stroms während des Transformationsprozesses. Diese Anpassung ist hinlänglich bekannt und wird daher an dieser Stelle nicht weiter beschrieben. Ausgangsseitig liegen nach der Amplitudenanpassung amplitudenangepasste Strommesswerte $I'_a$, $I'_b$, $I'_c$ vor.

Nachfolgend wird eine Anpassung des Phasenwinkels zwischen der Ober- und der Unterspanungsseite durchgeführt. Die Phasenwinkelveränderung resultiert im Wesentlichen aus der konstruktiv vorgegebenen Schaltgruppe und der Stellung etwaiger Stufenschalter oder Phasenschieber. Hierzu werden die amplitudenangepassten Strommesswerte $I'_a$, $I'_b$, $I'_c$ mittels der nachfolgend dargestellten Anpassungsgleichung in amplituden- und phasenwinkelangepasste Strommesswerte $I''_a$, $I''_b$, $I''_c$ umgesetzt:

$$\begin{pmatrix} I''_a \\ I''_b \\ I''_c \end{pmatrix} = \begin{pmatrix} k(\alpha) & k(\alpha - 120°) & k(\alpha + 120°) \\ k(\alpha + 120°) & k(\alpha) & k(\alpha - 120°) \\ k(\alpha - 120°) & k(\alpha + 120°) & k(\alpha) \end{pmatrix} \cdot \begin{pmatrix} I'_a \\ I'_b \\ I'_c \end{pmatrix}.$$

In dieser Gleichung wird eine phasenwinkelabhängige Matrixkomponente $k(\alpha)$ eingesetzt, die wie folgt definiert ist:

$$k(\alpha) = \frac{2}{3} \cdot \cos(\alpha) + \frac{1}{3} \cdot \sqrt{2} \cdot \cos\left(3 \cdot \alpha + \frac{1}{4} \cdot \pi\right).$$

Sofern auf einer Seite des Transformators 10 durch entsprechende Sternpunktbehandlung eine Nullsystemstromkomponente auftritt, kann diese gemeinsam mit der Phasenwinkelanpassung unter Verwendung einer erweiterten Anpassungsgleichung wie nachfolgend dargestellt ausgeglichen werden:

$$\begin{pmatrix} I''_a \\ I''_b \\ I''_c \end{pmatrix} = \begin{pmatrix} k(\alpha) & k(\alpha - 120°) & k(\alpha + 120°) \\ k(\alpha + 120°) & k(\alpha) & k(\alpha - 120°) \\ k(\alpha - 120°) & k(\alpha + 120°) & k(\alpha) \end{pmatrix} \cdot \begin{pmatrix} I'_a \\ I'_b \\ I'_c \end{pmatrix} + f(\alpha) \cdot \begin{pmatrix} I'_e \\ I'_e \\ I'_e \end{pmatrix},$$

Dabei stehen $I'_e$ für den ggf. hinsichtlich seiner Amplitude über das Transformatorübersetzungsverhältnis n angepassten Sternpunktstrom und $f(\alpha)$ für den phasenwinkelabhängigen Nullstromkomponenten-Faktor:

$$f(\alpha) = \frac{1}{3} \cdot \sqrt{2} \cdot \cos\left(3 \cdot \alpha + \frac{1}{4} \cdot \pi\right).$$

Der Sternpunktstrom $I_e$ kann dabei wie oben beschrieben rechnerisch aus den amplitudenangepassten Strommesswerten ermittelt werden. Alternativ kann der Sternpunktstrom $I_e$ bei Vorhandensein einer entsprechenden Messeinrichtung im Strompfad zwischen Sternpunkt und Erde auch messtechnisch ermittel und an die Differentialschutzeinrichtung 11 übermittelt werden (in der Figur nicht dargestellt).

Die amplituden- und phasenwinkelangepassten Strommesswerte $I''_a$, $I''_b$, $I''_c$ der Niederspanungsseite können nun gemeinsam mit den auf der Oberspannungsseite erfassten Strommesswerten $I_A$, $I_B$, $I_C$ für den Differentialschutzvergleich herangezogen werden. Im einfachsten Fall wird dabei unter Bildung eines Differenzwertes die Differenz aus den Beträgen jeweils zu einer Phase gehörender Strommesswerte gebildet und mit einem Schwellenwert verglichen. Sofern der Differenzwert den Schwellenwert überschreitet, wird ein interner Fehler erkannt und ein Auslösesignal TRIP für einen (in der Figur nicht dargestellten Leistungsschalter) abgegeben, um weitere Beschädigungen des Transformators zu verhindern.

Um das Differentialschutzverfahren dynamisch an die Höhe des fließenden Stroms anzupassen, kann zudem aus den Strommesswerten $I_A$, $I_B$, $I_C$ und $I''_a$, $I''_b$, $I''_c$ ein Stabilisierungsstromwert (z.B. durch phasenweise Addition der Beträge der jeweiligen Strommesswerte) gebildet werden und die Lage des Messwertpaares aus Differenzwert und Stabilisierungsstromwert in einem Auslösediagramm geprüfte werden. Sofern das Messwertpaar mindestens einer Phase des Transformators innerhalb eines Auslösegebietes liegt, wird das oben erwähnte Auslösesignal TRIP erzeugt.

Das Verfahren wurde voranstehend beispielhaft anhand einer Anpassung der Strommesswerte der Niederspanungsseite erläutert. In Abweichung dazu können selbstverständlich auch die Strommesswerte der Oberspannungsseite angepasst werden und im Differentialschutzvergleich mit den erfassten Strommesswerten von der Niederspannungsseite verglichen werden. Entsprechendes gilt für weitere Seiten eines mehr als zweiseitigen Transformators, d.h. grundsätzlich ist die Festlegung einer Bezugsseite auf eine beliebige Seite des Transformators möglich.

Der Phasenwinkel $\alpha$ im lastfreien Zustand des Transformators kann entweder fest vorgegeben und beispielsweise als Parameter in der Differentialschutzeinrichtung 11 eingestellt sein. Er kann aber auch phasenweise dynamisch aus den Strommesswerten beider Seiten des Transformators mit der Messwerterfassungseinrichtung 12, der Auswerteeinrichtung 13 oder einer entsprechenden separaten Messeinrichtung 14 ermittelt und der Differentialschutzeinrichtung 11 zur Verfügung gestellt werden. Dies kann kontinuierlich, in regelmäßigen Abständen oder ereignisbestimmt erfolgen. Alternativ kann auch eine Stellung S eines Stufenschalters des Transformators 10 erfasst und an die Differentialschutzeinrichtung 11 übermittelt werden, die - z.B. unter der Nutzung einer entsprechenden Tabelle oder einer geeigneten mathematischen Gleichung - den Phasenwinkel $\alpha$ in Abhängigkeit von der jeweiligen Stellung des Stufenschalter ermittelt.

Mit der beschriebenen Vorgehensweise kann eine universelle Anpassung der Strommesswerte hinsichtlich des Phasenwinkels für beliebige Arten von Transformatoren durchgeführt werden. Insbesondere eignet sich das Verfahren für Transformatoren mit einer von 30°-Schritten abweichenden Phasenverschiebung oder Transformatoren mit die Phasenwinkelverschiebung beeinflussenden Stufenschaltern ("Querregler"). Allerdings kann das Verfahren auch bei Transformatoren mit starrer Konstruktion und einer herkömmlichen Phasenverschiebung in 30°-Schritten angewandt werden.

**Patentansprüche**

1. Differentialschutzverfahren zum Überwachen eines dreiphasigen Transformators (10) hinsichtlich interner Fehler, bei dem

- auf allen Seiten (10a, 10b) des Transformators (10) für jede Phase den Stromverlauf innerhalb der jeweiligen Phase angebende Strommesswerte erfasst werden;
- unter Verwendung der erfassten Strommesswerte einer Bezugsseite (10a) des Transformators (10) einerseits und amplituden- und phasenwinkelangepassten Strommesswerten aller übrigen Seiten (10b) des Transformators (10) andererseits unter Bildung jeweiliger Differenzwerte eine phasenbezogene Differenzwertbildung durchgeführt wird und ein interner Fehler hinsichtlich des Transformators (10) erkannt wird, wenn zumindest einer der Differenzwerte einen vorgegebenen Schwellenwert überschreitet, wobei zur Bildung der amplituden- und phasenwinkelangepassten Strommesswerte zunächst die auf allen übrigen Seiten (10b) des Transformators (10) erfassten Strommesswerte für alle Phasen unter Verwendung des Transformatorübersetzungsverhältnisses unter Bildung von amplitudenangepassten Strommesswerten einer Amplitudenanpassung unterzogen und daraufhin die amplitudenangepassten Strommesswerte unter Bildung von amplituden- und phasenwinkelangepassten Strommesswerten einer Phasenwinkelanpassung unterzogen werden, die eine durch den Transformator (10) bewirkte Phasenverschiebung ausgleicht;

**dadurch gekennzeichnet, dass**

- zur Phasenwinkelanpassung der Strommesswerte die folgende Gleichung verwendet wird:

$$\begin{pmatrix} I''_a \\ I''_b \\ I''_c \end{pmatrix} = \begin{pmatrix} k(\alpha) & k(\alpha-120°) & k(\alpha+120°) \\ k(\alpha+120°) & k(\alpha) & k(\alpha-120°) \\ k(\alpha-120°) & k(\alpha+120°) & k(\alpha) \end{pmatrix} \cdot \begin{pmatrix} I'_a \\ I'_b \\ I'_c \end{pmatrix},$$

mit dem Matrixkoeffizienten

$$k(\alpha) = \frac{2}{3} \cdot \cos(\alpha) + \frac{1}{3} \cdot \sqrt{2} \cdot \cos\left(3 \cdot \alpha + \frac{1}{4} \cdot \pi\right),$$

wobei

$I''_a$ = amplituden- und phasenwinkelangepasster Strommesswert der jeweiligen übrigen Seite (10b) des Transformators (10) für Phase a;
$I''_b$ = amplituden- und phasenwinkelangepasster Strommesswert der jeweiligen übrigen Seite (10b) des Transformators (10) für Phase b;
$I''_c$ = amplituden- und phasenwinkelangepasster Strommesswert der jeweiligen übrigen Seite (10b) des Transformators (10) für Phase c;
$I'_a$ = amplitudenangepasster Strommesswert der jeweiligen übrigen Seite (10b) des Transformators (10) für Phase a;
$I'_b$ = amplitudenangepasster Strommesswert der jeweiligen übrigen Seite (10b) des Transformators (10) für Phase b;
$I'_c$ = amplitudenangepasster Strommesswert der jeweiligen übrigen Seite (10b) des Transformators (10) für Phase c;
$\alpha$ = durch den Transformator (10) im belasteten Zustand bewirkte Phasenwinkelverschiebung zwischen den phasenbezogenen Strömen auf der jeweiligen übrigen Seite (10b) des Transformators (10) hinsichtlich der phasenbezogenen Ströme auf der Bezugsseite (10a) des Transformators (10), wobei

die durch den Transformator (10) im belasteten Zustand bewirkte Phasenwinkelverschiebung zwischen den phasenbezogenen Strömen auf der jeweiligen übrigen Seite (10b) des Transformators (10) hinsichtlich der phasenbezogenen Ströme auf der Bezugsseite (10a) des Transformators (10) aus der Stellung eines Stufenschalters des Transformators (10) abgeleitet wird, wobei
die Phasenwinkelverschiebung unter Verwendung einer die jeweilige Phasenwinkelverschiebung in Abhängigkeit von der jeweiligen Stellung des Stufenschalters beschreibenden mathematischen Gleichung ermittelt wird, die die magnetische und elektrische Verkopplung der Induktivitäten des Transformators berücksichtigt, wobei sich Koeffizienten dieser Gleichung aus Windungszahl-Verhältnissen ableiten.

2. Differentialschutzverfahren nach Anspruch 1,
   **dadurch gekennzeichnet, dass**

   - bei der Phasenwinkelanpassung zusätzlich eine Korrektur einer Nullstromkomponente der amplitudenangepassten Strommesswerte der jeweiligen übrigen Seite (10b) des Transformators (10) stattfindet, wobei in diesem Fall die Phasenwinkelanpassung gemäß der folgenden erweiterten Gleichung durchgeführt wird:

$$\begin{pmatrix} I''_a \\ I''_b \\ I''_c \end{pmatrix} = \begin{pmatrix} k(\alpha) & k(\alpha-120°) & k(\alpha+120°) \\ k(\alpha+120°) & k(\alpha) & k(\alpha-120°) \\ k(\alpha-120°) & k(\alpha+120°) & k(\alpha) \end{pmatrix} \cdot \begin{pmatrix} I'_a \\ I'_b \\ I'_c \end{pmatrix} + f(\alpha) \cdot \begin{pmatrix} I'_e \\ I'_e \\ I'_e \end{pmatrix},$$

mit dem Nullstromkomponenten-Faktor

$$f(\alpha) = \frac{1}{3} \cdot \sqrt{2} \cdot \cos\left(3 \cdot \alpha + \frac{1}{4} \cdot \pi\right),$$

wobei

$I'_e$ = amplitudenangepasster Sternpunktstrom.

3. Differentialschutzverfahren nach Anspruch 2,
   **dadurch gekennzeichnet, dass**

   - der Sternpunktstrom durch Messung ermittelt wird; und
   - der Sternpunktstrom unter Verwendung des Transformatorübersetzungsverhältnisses unter Bildung eines amplitudenangepassten Sternpunktstromes einer Amplitudenanpassung unterzogen wird.

4. Differentialschutzverfahren nach Anspruch 2,
   **dadurch gekennzeichnet, dass**

   - der Sternpunktstrom aus den amplitudenangepassten Strommesswerten der jeweiligen übrigen Seite (10b) des Transformators (10) berechnet wird.

5. Differentialschutzeinrichtung (11) zum Überwachen eines dreiphasigen Transformators (10) hinsichtlich interner Fehler, mit

   - einer Messwerterfassungsvorrichtung (12), die dazu ausgebildet ist, auf allen Seiten (10a, 10b) des Transformators (10) für jede Phase den Stromverlauf innerhalb der jeweiligen Phase angebende Strommesswerte zu erfassen; und
   - einer Auswerteeinrichtung (13), die dazu eingerichtet ist, unter Verwendung der erfassten Strommesswerte einer Bezugsseite (10a) des Transformators (10) einerseits und amplituden- und phasenwinkelangepassten Strommesswerten aller übrigen Seiten (10b) des Transformators (10) andererseits unter Bildung jeweiliger Differenzwerte eine phasenbezogene Differenzwertbildung durchzuführen und einen internen Fehler hinsichtlich des Transformators (10) zu erkennen, wenn zumindest einer der Differenzwerte einen vorgegebenen Schwellenwert überschreitet, wobei die Auswerteeinrichtung (13) dazu eingerichtet ist, zur Bildung der amplituden- und phasenwinkelangepassten Strommesswerte zunächst die auf allen übrigen Seiten (10b) des Transformators (10) erfassten Strommesswerte für alle Phasen unter Verwendung des Transformatorübersetzungsverhältnisses unter Bildung von amplitudenangepassten Strommesswerten einer Amplitudenanpassung zu unterziehen und daraufhin die amplitudenangepassten Strommesswerte unter Bildung von amplituden- und phasenwinkelangepassten Strommesswerten einer Phasenwinkelanpassung zu unterziehen, die eine durch den Transformator (10) bewirkte Phasenverschiebung ausgleicht;

   **dadurch gekennzeichnet, dass**

   - die Auswerteeinrichtung (13) dazu eingerichtet ist, zur Phasenwinkelanpassung der Strommesswerte die folgende Gleichung zu verwenden:

$$\begin{pmatrix} I''_a \\ I''_b \\ I''_c \end{pmatrix} = \begin{pmatrix} k(\alpha) & k(\alpha - 120°) & k(\alpha + 120°) \\ k(\alpha + 120°) & k(\alpha) & k(\alpha - 120°) \\ k(\alpha - 120°) & k(\alpha + 120°) & k(\alpha) \end{pmatrix} \cdot \begin{pmatrix} I'_a \\ I'_b \\ I'_c \end{pmatrix},$$

mit dem Matrixkoeffizienten

$$k(\alpha) = \frac{2}{3} \cdot \cos(\alpha) + \frac{1}{3} \cdot \sqrt{2} \cdot \cos\left(3 \cdot \alpha + \frac{1}{4} \cdot \pi\right),$$

wobei

I"$_a$ = amplituden- und phasenwinkelangepasster Strommesswert der jeweiligen übrigen Seite (10b) des Transformators (10) für Phase a;
I"$_b$ = amplituden- und phasenwinkelangepasster Strommesswert der jeweiligen übrigen Seite (10b) des Transformators (10) für Phase b;
I"$_c$ = amplituden- und phasenwinkelangepasster Strommesswert der jeweiligen übrigen Seite (10b) des Transformators (10) für Phase c;
I'$_a$ = amplitudenangepasster Strommesswert der jeweiligen übrigen Seite (10b) des Transformators (10) für Phase a;
I'$_b$ = amplitudenangepasster Strommesswert der jeweiligen übrigen Seite (10b) des Transformators (10) für Phase b;
I'$_c$ = amplitudenangepasster Strommesswert der jeweiligen übrigen Seite (10b) des Transformators (10) für Phase c;
$\alpha$ = durch den Transformator im belasteten Zustand be-wirkte Phasenwinkelverschiebung zwischen den phasenbezogenen Strömen auf der jeweiligen übrigen Seite (10b) des Transformators (10) hinsichtlich der phasenbezogenen Ströme auf der Bezugsseite (10a) des Transformators (10),

wobei die Messwerterfassungseinrichtung (12) der Differentialschutzeinrichtung (11) Mittel zur Erfassung der Stellung eines Stufenschalters des Transformators (10) aufweist und wobei
die Auswerteeinrichtung dazu eingerichtet ist, die Phasenwinkelverschiebung unter Verwendung einer die jeweilige Phasenwinkelverschiebung in Abhängigkeit von der jeweiligen Stellung des Stufenschalters beschreibenden mathematischen Gleichung zu ermitteln, die die magnetische und elektrische Verkopplung der Induktivitäten des Transformators berücksichtigt, wobei sich Koeffizienten dieser Gleichung aus Windungszahl-Verhältnissen ableiten.

6. Differentialschutzeinrichtung (11) nach Anspruch 5,
**dadurch gekennzeichnet, dass**

- bei der Phasenwinkelanpassung zusätzlich eine Korrektur einer Nullstromkomponente der amplitudenangepassten Strommesswerte der jeweiligen übrigen Seite (10b) des Transformators (10) stattfindet, wobei in diesem Fall die Phasenwinkelanpassung gemäß der folgenden erweiterten Gleichung durchgeführt wird:

$$\begin{pmatrix} I''_a \\ I''_b \\ I''_c \end{pmatrix} = \begin{pmatrix} k(\alpha) & k(\alpha-120°) & k(\alpha+120°) \\ k(\alpha+120°) & k(\alpha) & k(\alpha-120°) \\ k(\alpha-120°) & k(\alpha+120°) & k(\alpha) \end{pmatrix} \cdot \begin{pmatrix} I'_a \\ I'_b \\ I'_c \end{pmatrix} + f(\alpha) \cdot \begin{pmatrix} I'_e \\ I'_e \\ I'_e \end{pmatrix} \quad ,$$

mit dem Nullstromkomponenten-Faktor

$$f(\alpha) = \frac{1}{3} \cdot \sqrt{2} \cdot \cos\left(3 \cdot \alpha + \frac{1}{4} \cdot \pi\right),$$

wobei

I'$_e$ = amplitudenangepasster Sternpunktstrom.

7. Differentialschutzeinrichtung (11) nach einem der Ansprüche 5 oder 6,
**dadurch gekennzeichnet, dass**

- die Messwerterfassungseinrichtung (12) oder die Auswerteeinrichtung (13) der Differentialschutzeinrichtung (11) Mittel zur Erfassung der durch den Transformator (10) im belasteten Zustand bewirkten Phasenwinkelverschiebung zwischen den phasenbezogenen Strömen auf der jeweiligen übrigen Seite (10b) des Transformators (10) hinsichtlich der phasenbezogenen Ströme auf der Bezugsseite (10a) des Transformators (10) aufweist.

## Claims

1. Differential protection method for monitoring a three-phase transformer (10) for internal faults, in which

- measured current values defining the current curve within the respective phase are registered for each phase on all sides (10a, 10b) of the transformer (10);
- a phase-related difference-value formation is carried out using the registered measured current values from a reference side (10a) of the transformer (10) on the one hand and amplitude-adjusted and phase-angle-adjusted measured current values from all other sides (10b) of the transformer (10) on the other hand while forming respective difference values, and an internal fault is detected in the transformer (10) if at least one of the difference values exceeds a prespecified threshold value, wherein, in order to form the amplitude-adjusted and phase-angle-adjusted measured current values, the measured current values for all phases registered on all other sides (10b) of the transformer (10) are initially subjected to an amplitude adjustment with the formation of amplitude-adjusted measured current values using the transformer ratio, after which the amplitude-adjusted measured current values are subjected to a phase-angle adjustment with the formation of amplitude-adjusted and phase-angle-adjusted measured current values, which compensates for a phase shift caused by the transformer (10);

**characterized in that**

- the following equation is used for phase-angle adjustment of the measured current values:

$$
\begin{pmatrix} I''_a \\ I''_b \\ I''_c \end{pmatrix} = \begin{pmatrix} k(\alpha) & k(\alpha-120°) & k(\alpha+120°) \\ k(\alpha+120°) & k(\alpha) & k(\alpha-120°) \\ k(\alpha-120°) & k(\alpha+120°) & k(\alpha) \end{pmatrix} \cdot \begin{pmatrix} I'_a \\ I'_b \\ I'_c \end{pmatrix} ,
$$

with the matrix coefficients

$$
k(\alpha) = \frac{2}{3} \cdot \cos(\alpha) + \frac{1}{3} \cdot \sqrt{2} \cdot \cos\left(3 \cdot \alpha + \frac{1}{4} \cdot \pi\right) ,
$$

where

$I''_a$ = amplitude-adjusted and phase-angle-adjusted measured current value of the respective other side (10b) of the transformer (10) for phase a;
$I''_b$ = amplitude-adjusted and phase-angle-adjusted measured current value of the respective other side (10b) of the transformer (10) for phase b;
$I''_c$ = amplitude-adjusted and phase-angle-adjusted measured current value of the respective other side (10b) of the transformer (10) for phase c;
$I'_a$ = amplitude-adjusted measured current value of the respective other side (10b) of the transformer (10) for phase a;
$I'_b$ = amplitude-adjusted measured current value of the respective other side (10b) of the transformer (10) for phase b;
$I'_c$ = amplitude-adjusted measured current value of the respective other side (10b) of the transformer (10) for phase c;
$\alpha$ = shift in the phase angle caused by the transformer (10) when under load between the phase-related currents on the respective other side (10b) of the transformer (10) in respect of the phase-related currents on the reference side (10a) of the transformer (10),

wherein
the shift in the phase angle caused by the transformer (10) when under load between the phase-related currents on the respective other side (10b) of the transformer (10) in respect of the phase-related currents on the reference side (10a) of the transformer (10) is derived from the position of a tap switch of the transformer (10), wherein the phase-angle shift is determined using a mathematical equation describing the respective phase-angle shift depending on the respective position of the tap switch, which equation takes into account the magnetic and electrical coupling of the inductances of the transformer, wherein coefficients of this equation are derived from winding count ratios.

2. Differential protection method according to Claim 1, **characterized in that**

- in the phase-angle adjustment, a correction of a neutral current component of the amplitude-adjusted measured current values of the respective other side (10b) of the transformer (10) also takes place, wherein, in this case, the phase-angle adjustment is performed according to the following extended equation:

$$\begin{pmatrix} I_a'' \\ I_b'' \\ I_c'' \end{pmatrix} = \begin{pmatrix} k(\alpha) & k(\alpha - 120°) & k(\alpha + 120°) \\ k(\alpha + 120°) & k(\alpha) & k(\alpha - 120°) \\ k(\alpha - 120°) & k(\alpha + 120°) & k(\alpha) \end{pmatrix} \cdot \begin{pmatrix} I_a' \\ I_b' \\ I_c' \end{pmatrix} + f(\alpha) \cdot \begin{pmatrix} I_e' \\ I_e' \\ I_e' \end{pmatrix} \quad,$$

with the neutral current component factor

$$f(\alpha) = \frac{1}{3} \cdot \sqrt{2} \cdot \cos\left(3 \cdot \alpha + \frac{1}{4} \cdot \pi\right),$$

where
$I'_e$ = amplitude-adjusted neutral-point current.

3. Differential protection method according to Claim 2, **characterized in that**

- the neutral-point current is determined by measurement; and
- the neutral-point current is subjected to an amplitude adjustment making use of the transformer ratio, forming an amplitude-adjusted neutral-point current.

4. Differential protection method according to Claim 2, **characterized in that**

- the neutral-point current is calculated from the amplitude-adjusted measured current values of the respective other side (10b) of the transformer (10).

5. Differential protection device (11) for monitoring a three-phase transformer (10) for internal faults, with

- a measured value registration device (12) that is configured to register measured current values defining the current curve within the respective phase for each phase on all sides (10a, 10b) of the transformer (10); and
- an evaluation device (13) that is designed to carry out a phase-related difference-value formation using the registered measured current values from a reference side (10a) of the transformer (10) on the one hand and amplitude-adjusted and phase-angle-adjusted measured current values from all other sides (10b) of the transformer (10) on the other hand while forming respective difference values, and to detect an internal fault in the transformer (10) if at least one of the difference values exceeds a prespecified threshold value, wherein, in order to form the amplitude-adjusted and phase-angle-adjusted measured current values, the evaluation device (13) is designed to initially subject the measured current values for all phases registered on all other sides (10b) of the transformer (10) to an amplitude adjustment with the formation of amplitude-adjusted measured current values using the transformer ratio, and then to subject the amplitude-adjusted measured current values to a phase-angle adjustment with the formation of amplitude-adjusted and phase-angle-adjusted measured current values, which compensates for a phase shift caused by the transformer (10);

**characterized in that**

- the evaluation device (13) is designed to use the following equation for phase-angle adjustment of the measured current values:

$$\begin{pmatrix} I_a'' \\ I_b'' \\ I_c'' \end{pmatrix} = \begin{pmatrix} k(\alpha) & k(\alpha - 120°) & k(\alpha + 120°) \\ k(\alpha + 120°) & k(\alpha) & k(\alpha - 120°) \\ k(\alpha - 120°) & k(\alpha + 120°) & k(\alpha) \end{pmatrix} \cdot \begin{pmatrix} I_a' \\ I_b' \\ I_c' \end{pmatrix},$$

with the matrix coefficients

$$k(\alpha) = \frac{2}{3} \cdot \cos(\alpha) + \frac{1}{3} \cdot \sqrt{2} \cdot \cos\left(3 \cdot \alpha + \frac{1}{4} \cdot \pi\right),$$

where

$I''_a$ = amplitude-adjusted and phase-angle-adjusted measured current value of the respective other side (10b) of the transformer (10) for phase a;

$I''_b$ = amplitude-adjusted and phase-angle-adjusted measured current value of the respective other side (10b) of the transformer (10) for phase b;

$I''_c$ = amplitude-adjusted and phase-angle-adjusted measured current value of the respective other side (10b) of the transformer (10) for phase c;

$I'_a$ = amplitude-adjusted measured current value of the respective other side (10b) of the transformer (10) for phase a;

$I'_b$ = amplitude-adjusted measured current value of the respective other side (10b) of the transformer (10) for phase b;

$I'_c$ = amplitude-adjusted measured current value of the respective other side (10b) of the transformer (10) for phase c;

$\alpha$ = shift in the phase angle caused by the transformer when under load between the phase-related currents on the respective other side (10b) of the transformer (10) in respect of the phase-related currents on the reference side (10a) of the transformer (10),

wherein

the measured value registration device (12) of the differential protection device (11) comprises means for registering the position of a tap switch of the transformer (10) and wherein the evaluation device is configured to determine the phase-angle shift using a mathematical equation describing the respective phase-angle shift depending on the respective position of the tap switch, which equation takes into account the magnetic and electrical coupling of the inductances of the transformer, wherein coefficients of this equation are derived from winding count ratios.

6. Differential protection device (11) according to Claim 5, **characterized in that**

- in the phase-angle adjustment, a correction of a neutral current component of the amplitude-adjusted measured current values of the respective other side (10b) of the transformer (10) also takes place, wherein, in this case, the phase-angle adjustment is performed according to the following extended equation:

$$\begin{pmatrix} I_a'' \\ I_b'' \\ I_c'' \end{pmatrix} = \begin{pmatrix} k(\alpha) & k(\alpha - 120°) & k(\alpha + 120°) \\ k(\alpha + 120°) & k(\alpha) & k(\alpha - 120°) \\ k(\alpha - 120°) & k(\alpha + 120°) & k(\alpha) \end{pmatrix} \cdot \begin{pmatrix} I_a' \\ I_b' \\ I_c' \end{pmatrix} + f(\alpha) \cdot \begin{pmatrix} I_e' \\ I_e' \\ I_e' \end{pmatrix},$$

with the neutral current component factor

$$f(\alpha) = \frac{1}{3} \cdot \sqrt{2} \cdot \cos\left(3 \cdot \alpha + \frac{1}{4} \cdot \pi\right),$$

where

$I'_e$ = amplitude-adjusted neutral-point current.

7.  Differential protection device (11) according to one of Claims 5 or 6,
    **characterized in that**

    - the measured value registration device (12) or the evaluation device (13) of the differential protection device (11) comprises means for registering the shift in the phase angle caused by the transformer (10) when under load between the phase-related currents on the respective other side (10b) of the transformer (10) in respect of the phase-related currents on the reference side (10a) of the transformer (10).

**Revendications**

1.  Procédé de protection différentielle pour le contrôle d'un transformateur (10) triphasé en ce qui concerne des défauts internes, dans lequel

    - de tous les côtés (10a, 10b) du transformateur (10), on relève, pour chaque phase, des valeurs de mesure du courant indiquant la courbe du courant dans la phase respective ;
    - en utilisant les valeurs de mesure de courant relevées d'un côté (10a) de référence du transformateur (10) d'une part et des valeurs de mesure du courant adaptées en amplitude et en angle de phase de tous les autres côtés (10b) du transformateur (10) d'autre part, on effectue, en formant des valeurs de différence respectives, une formation de valeur de différence rapportée à la phase et on détecte un défaut interne concernant le transformateur (10) si au moins l'une des valeurs de différence dépasse une valeur de seuil donnée à l'avance, dans lequel, pour la formation des valeurs de mesure courant adaptées en amplitude et en angle de phase, on soumet d'abord, pour toutes les phases, les valeurs de mesure de courant relevées de tous les autres côtés (10b) du transformateur (10) en utilisant le rapport de transformation du transformateur, à une adaptation d'amplitude en formant des valeurs de mesure de courant adaptées en amplitude et ensuite, on soumet les valeurs de mesure du courant adaptées en amplitude à une adaptation en angle de phase en formant des mesures de valeur du courant adaptées en amplitude et en angle de phase, adaptation qui compense un décalage de phase provoqué par le transformateur (10) ;

    **caractérisé en ce que**
    on utilise, pour l'adaptation en angle de phase des valeurs de mesure de courant, l'équation suivante :

$$\begin{pmatrix} I''_a \\ I''_b \\ I''_c \end{pmatrix} = \begin{pmatrix} k(\alpha) & k(\alpha-120°) & k(\alpha+120°) \\ k(\alpha-120°) & k(\alpha) & k(\alpha-120°) \\ k(\alpha-120°) & k(\alpha+120°) & k(\alpha) \end{pmatrix} \cdot \begin{pmatrix} I'_a \\ I'_b \\ I'_c \end{pmatrix} + f(\alpha) \cdot \begin{pmatrix} I'_a \\ I'_b \\ I'_c \end{pmatrix},$$

    ayant les coefficients de matrice

$$k(\alpha) = \frac{2}{3} \cdot \cos(\alpha) + \frac{1}{3} \cdot \sqrt{2} \cdot \cos\left(3 \cdot \alpha + \frac{1}{4} \cdot \pi\right),$$

    dans laquelle

    I"$_a$ = valeur de mesure du courant adaptée en amplitude et en angle de phase de l'autre côté (10b) respectif du transformateur (10) pour la phase a ;
    I"$_b$ = valeur de mesure du courant adaptée en amplitude et en angle de phase de l'autre côté (10b) respectif du transformateur (10) pour la phase b ;
    I"$_c$ = valeur de mesure du courant adaptée en amplitude et en angle de phase de l'autre côté (10b) respectif du transformateur (10) pour la phase c ;
    I'$_a$ = valeur de mesure du courant adaptée en amplitude et en angle de phase de l'autre côté (10b) respectif du transformateur (10) pour la phase a ;
    I'$_b$ = valeur de mesure du courant adaptée en amplitude et en angle de phase de l'autre côté (10b) respectif du transformateur (10) pour la phase b ;

l'$_c$ = valeur de mesure du courant adaptée en amplitude et en angle de phase de l'autre côté (10b) respectif du transformateur (10) pour la phase c ;

$\alpha$ = décalage d'angle de phase, provoqué à l'état chargé par le transformateur (10), entre les courants rapportés aux phases de l'autre côté (10b) respectif du transformateur (10) en ce qui concerne les courants rapportés aux phases du côté (10a) de référence du transformateur (10), dans laquelle

on détermine le décalage d'angle de phase en utilisant une équation mathématique, qui décrit le décalage d'angle de phase respectif en fonction de la position respective du commutateur à gradins et qui prend en compte le couplage magnétique et électrique des inductances du transformateur, des coefficients de cette équation se déduisant des rapports de nombre de spires.

2. Procédé de protection différentielle suivant la revendication 1, **caractérisé en ce que**,
lors de l'adaptation en angle de phase, a lieu supplémentairement une correction d'une composante de courant nul des valeurs de mesure de courant adaptées en amplitude de l'autre côté (10b) respectif du transformateur (10), dans lequel dans ce cas on effectue l'adaptation en angle de phase suivant l'équation agrandie suivante :

$$\begin{pmatrix} I'_a \\ I'_b \\ I'_c \end{pmatrix} = \begin{pmatrix} k(\alpha) & k(\alpha-120°) & k(\alpha+120°) \\ k(\alpha-120°) & k(\alpha) & k(\alpha-120°) \\ k(\alpha-120°) & k(\alpha+120°) & k(\alpha) \end{pmatrix} \cdot \begin{pmatrix} I'_a \\ I'_b \\ I'_c \end{pmatrix} + f(\alpha) \cdot \begin{pmatrix} I'_e \\ I'_e \\ I'_e \end{pmatrix},$$

avec le facteur de composante de courant nul

$$f(\alpha) = \frac{1}{3} \cdot \sqrt{2} \cdot \cos\left(3 \cdot \alpha + \frac{1}{4} \cdot \pi\right),$$

dans laquelle

l'$_e$ = courant de point neutre adapté en amplitude.

3. Procédé de protection différentielle suivant la revendication 2, **caractérisé en ce que**
on détermine le courant de point neutre par une mesure et on soumet le courant de point neutre, en utilisant le rapport de transformation du transformateur, à une adaptation en amplitude en formant un courant de point neutre adapté en amplitude.

4. Procédé de protection différentielle suivant la revendication 2, **caractérisé en ce que**
on calcule le courant de point neutre à partir des valeurs de mesure de courant adaptées en amplitude, l'autre côté (10b) respectif du transformateur (10).

5. Dispositif (11) de protection différentielle pour le contrôle d'un transformateur (10) triphasé en ce qui concerne les défauts internes, comprenant

   - un système (12) de relevé de valeur de mesure, qui est constitué pour relever de tous les côtés (10a, 10b) du transformateur (10) pour chaque phase des valeurs de mesure de courant indiquant la courbe du courant dans la phase respective et
   - un dispositif (13) d'exploitation, qui est conçu pour, en utilisant les valeurs de mesure relevées d'un côté (10a) de référence du transformateur (10) d'une part et des valeurs de mesure de courant adaptées en amplitude et en angle de phase de tous les autres côtés (10b) du transformateur (10) d'autre part, effectuer, en formant des valeurs différentielles respectives, une formation de valeurs de différence rapportée à la phase et détecter un défaut interne concernant le transformateur (10), si au moins l'une des valeurs de différence dépasse une valeur de seuil donnée à l'avance, dans lequel le dispositif (13) d'exploitation est conçu pour soumettre, pour la formation des valeurs de mesure de courant adaptées en amplitude et en angle de phase, d'abord les valeurs de mesure de courant relevées de tous les autres côtés (10b) du transformateur (10) pour toutes les phases, en utilisant le rapport de multiplication du transformateur, à une adaptation d'amplitude en formant des valeurs de mesure de courant adaptées en amplitude et ensuite, pour soumettre les valeurs de mesure du courant adaptées en amplitude à une adaptation en angle de phase en formant des valeurs de mesure de courant adaptées en amplitude et en angle de phase, adaptation d'angle de phase qui compense un décalage, de phase provoqué par le transformateur (10) ;

**caractérisé en ce que**
le dispositif (13) d'exploitation est conçu pour utiliser pour l'adaptation en angle de phase des valeurs de mesure du courant, l'équation suivante :

$$\begin{pmatrix} I''_a \\ I''_b \\ I''_c \end{pmatrix} = \begin{pmatrix} k(\alpha) & k(\alpha-120°) & k(\alpha+120°) \\ k(\alpha-120°) & k(\alpha) & k(\alpha-120°) \\ k(\alpha-120°) & k(\alpha+120°) & k(\alpha) \end{pmatrix} \cdot \begin{pmatrix} I'_a \\ I'_b \\ I'_c \end{pmatrix} + f(\alpha) \cdot \begin{pmatrix} I'_a \\ I'_b \\ I'_c \end{pmatrix},$$

avec le facteur de composante de courant nul

$$k(\alpha) = \frac{2}{3} \cdot \cos(\alpha) + \frac{1}{3} \cdot \sqrt{2} \cdot \cos\left(3 \cdot \alpha + \frac{1}{4} \cdot \pi\right),$$

dans laquelle

$I''_a$ = valeur de mesure du courant adaptée en amplitude et en angle de phase de l'autre côté (10b) respectif du transformateur (10) pour la phase a ;
$I''_b$ = valeur de mesure du courant adaptée en amplitude et en angle de phase de l'autre côté (10b) respectif du transformateur (10) pour la phase b ;
$I''_c$ = valeur de mesure du courant adaptée en amplitude et en angle de phase de l'autre côté (10b) respectif du transformateur (10) pour la phase c ;
$I'_a$ = valeur de mesure du courant adaptée en amplitude et en angle de phase de l'autre côté (10b) respectif du transformateur (10) pour la phase a ;
$I'_b$ = valeur de mesure du courant adaptée en amplitude et en angle de phase de l'autre côté (10b) respectif du transformateur (10) pour la phase b ;
$I'_c$ = valeur de mesure du courant adaptée en amplitude et en angle de phase de l'autre côté (10b) respectif du transformateur (10) pour la phase c ;
$\alpha$ = décalage d'angle de phase, provoqué à l'état chargé par le transformateur (10), entre les courants rapportés aux phases de l'autre côté (10b) respectif du transformateur (10) en ce qui concerne les courants rapportés aux phases du côté (10a) de référence du transformateur (10),

dans lequel
le dispositif (12) de détection de valeur de mesure du dispositif (11) de protection différentielle a des moyens pour le relevé de la position d'un commutateur à gradins du transformateur (10) et dans lequel
le dispositif d'exploitation est conçu pour déterminer le décalage d'angle de phase en utilisant une équation mathématique, qui décrit le décalage d'angle de phase respectif en fonction de la position respective du commutateur à gradins et qui prend en compte le couplage magnétique et électrique des inductances du transformateur, des coefficients de cette équation se déduisant des rapports de nombre de spires.

6. Dispositif (11) de protection différentielle suivant la revendication 5,
**caractérisé en ce que**,

- lors de l'adaptation en angle de phase, a lieu supplémentairement une correction d'une composante de courant nul des valeurs de mesure de courant adaptées en amplitude de l'autre côté (10b) respectif du transformateur (10), dans ce cas on effectue l'adaptation en angle de phase suivant l'équation agrandie suivante :

$$\begin{pmatrix} I'_a \\ I'_b \\ I'_c \end{pmatrix} = \begin{pmatrix} k(\alpha) & k(\alpha-120°) & k(\alpha+120°) \\ k(\alpha+120°) & k(\alpha) & k(\alpha-120°) \\ k(\alpha-120°) & k(\alpha+120°) & k(\alpha) \end{pmatrix} \cdot \begin{pmatrix} I_a \\ I_b \\ I_c \end{pmatrix} - f(\alpha) \cdot \begin{pmatrix} I'_a \\ I'_b \\ I'_c \end{pmatrix},$$

avec le facteur de composante de courant nul

$$f(\alpha) = \frac{1}{3} \cdot \sqrt{2} \cdot \cos\left(3 \cdot \alpha + \frac{1}{4} \cdot \pi\right),$$

dans laquelle

$I'_e$ = courant de point neutre adapté en amplitude.

7. Dispositif (11) de protection différentielle suivant l'une des revendications 5 ou 6,

**caractérisé en ce que**
le dispositif (12) de détection de valeur de mesure ou le dispositif (13) d'exploitation du dispositif (11) de protection différentielle ont des moyens pour le relevé du décalage d'angle de phase, provoqué à l'état chargé par le transformateur (10), entre les courants rapportés aux phases de l'autre côté (10b) respectif du transformateur (10) par rapport aux courants rapportés aux phases du côté (10a) de référence du transformateur (10).

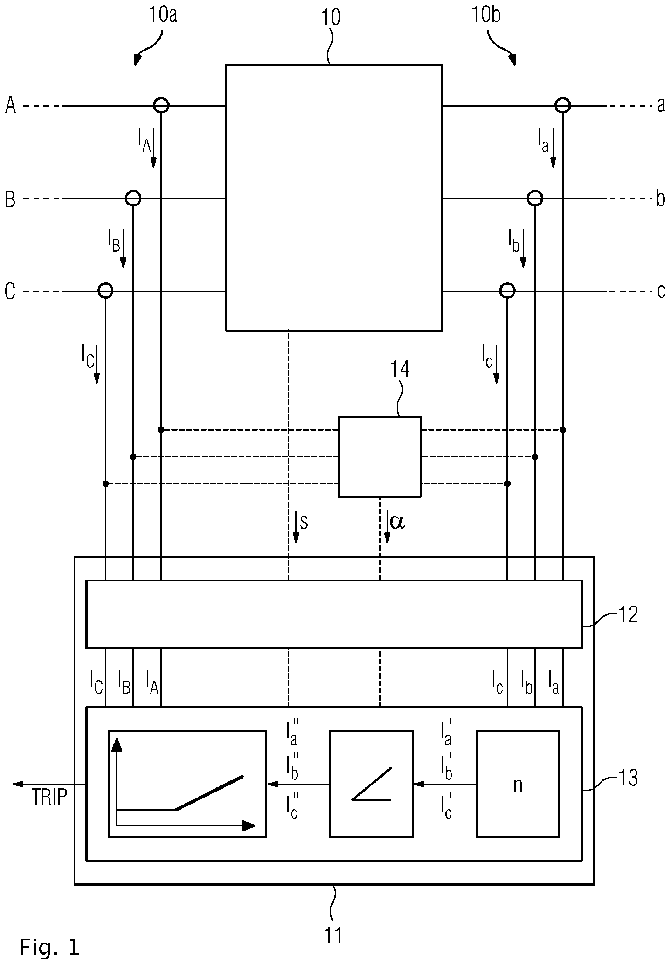

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10261837 A1
- US 6507184 B1
- WO 2007057240 A1
- DE 4416048 C1